(19) Europäisches Patentamt
European Patent Office
Office européen des brevets

(11) **EP 2 484 017 B1**

(12) **EUROPEAN PATENT SPECIFICATION**

(45) Date of publication and mention
of the grant of the patent:
**09.04.2014 Bulletin 2014/15**

(21) Application number: **10793293.1**

(22) Date of filing: **01.10.2010**

(51) Int Cl.:
*H04B 1/18* (2006.01)   *H02H 9/04* (2006.01)

(86) International application number:
**PCT/IB2010/002487**

(87) International publication number:
**WO 2011/039622 (07.04.2011 Gazette 2011/14)**

(54) **PROTECTION DEVICE FOR RADIOCOMMUNICATIONS APPARATUSES**

SCHUTZVORRICHTUNG FUNKKOMMUNIKATIONSGERÄTE

DISPOSITIF DE PROTECTION POUR APPAREILS DE RADIOCOMMUNICATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2009 IT TO20090744**

(43) Date of publication of application:
**08.08.2012 Bulletin 2012/32**

(73) Proprietor: **SELEX ES S.p.A.
Roma (IT)**

(72) Inventor: **FAGIOLI, Gabriele
I-66100 Chieti Scalo (IT)**

(74) Representative: **Cerbaro, Elena et al
Studio Torta S.p.A.
Via Viotti, 9
10121 Torino (IT)**

(56) References cited:
**WO-A1-2008/091254     US-A1- 2005 063 129**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a protection device for radiocommunications apparatuses.

BACKGROUND ART

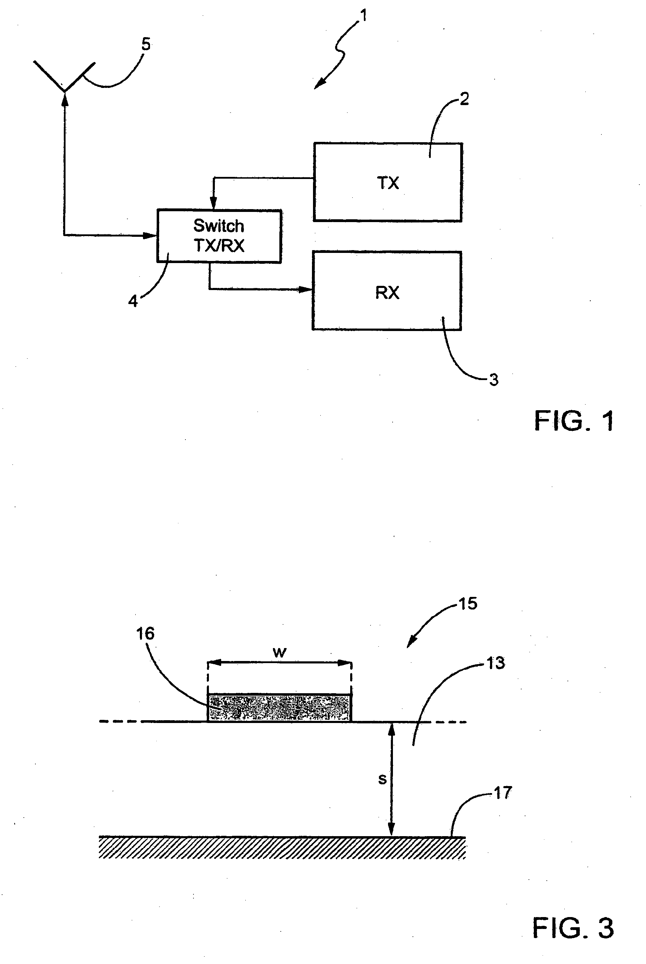

Figure 1 shows an example of a radiocommunications apparatus, in the case in point a radio-frequency transceiver 1, which in what follows will be referred to briefly as "transceiver 1".

In detail, the transceiver 1 comprises a transmitter stage 2 and a receiver stage 3, both of which are electrically connected to a switching stage 4, which is in turn electrically connected to an antenna 5, through which the transceiver 1 interfaces with the outside world. The switching stage 4 can work in a first operating condition or in a second operating condition, and can be electrically controlled. In particular, in the first operating condition, the switching stage 4 couples the transmitter stage 2 to the antenna 5, and decouples the receiver stage 3 from the antenna 5. Instead, in the second operating condition, the switching stage 4 couples the receiver stage 3 to the antenna 5, and decouples the transmitter stage 2 from the antenna 5.

Further examples of radiocommunications apparatuses comprise radio-frequency receivers, radio-frequency transmitters, and full-duplex transceivers. In particular, as compared to the transceiver 1, radio-frequency receivers are without the transmitter stage 2, and hence also without the switching stage 4. Instead, radio-frequency transmitters are without the receiver stage 3, as well as without the switching stage 4, whereas full-duplex transceivers have, instead of the switching stage 4, a coupler, or else an adder circuit, in such a way as to enable simultaneous operation of the transmitter stage 2 and of the receiver stage 3. In what follows, general reference will be made to transceivers (not necessarily full-duplex ones), even though the present invention finds use also in the case of radio-frequency transmitters and radio-frequency receivers.

Once again with reference to the transceiver 1, according to the operating condition of the switching stage 4, the antenna 5 emits electromagnetic signals coming from the transmitter stage 2, or else receives electromagnetic signals directed to the receiver stage 3. For this purpose, the antenna 5, and hence the transceiver 1 itself, are optimized for operating in a given operating band, i.e., for transmitting and receiving electromagnetic signals having frequencies comprised in the operating band.

Operatively, the antenna 5 enables the transceiver 1 to receive and transmit useful signals, i.e., electromagnetic signals generated by other transceivers and directed to the transceiver 1, or else electromagnetic signals generated by the transceiver 1 and directed to other transceivers. However, through the antenna 5, the transceiver 1 can be reached by disturbance of an electromagnetic type. In practice, if the transmitter stage 2, the receiver stage 3, and the switching stage 4 are referred to as a whole as "circuitry to be protected", present between the antenna 5 and the circuitry to be protected is a connection, which is electrically equivalent to a transmission line and typically comprises a stretch of coaxial cable. Through said connection, the disturbance can reach and damage the circuitry to be protected.

By way of example, in the case where lightning hits the antenna 5, the transceiver 1 is reached by disturbance having a limited duration (a few microseconds), but a large amplitude and a frequency comprised between 1MHz and 30MHz, which can burn the transmitter stage 2 and the receiver stage 3, the latter typically being the most delicate element of the entire transceiver 1.

Likewise, even in the absence of disturbance proper, the transceiver 1 can get damaged in the case where the antenna 5 receives electromagnetic signals issued by a plurality of external antennas that operate in respective operating bands at least partially overlapping the operating band of the transceiver 1. In fact, in said conditions, it is possible that, even though each of the electromagnetic signals received by the transceiver 1 does not in itself have a power sufficient to cause damage, the global power associated to the electromagnetic signals is such as to cause, in time, damage to the transceiver 1 due to excess of temperature.

In order to protect the transceiver 1, known to the art are electronic protection systems, which are generally set between the antenna 5 and the switching stage 4. Alternatively, in the case of radio-frequency transmitters or else of radio-frequency receivers, the electronic protection systems are set, respectively, between the antenna and the transmitter stage, or else between the antenna and the receiver stage.

Once again by way of example, the patent application No. US2005/0063129 describes a circuit for protection against static electricity for a high-frequency apparatus having a signal terminal designed to receive a high-frequency signal and a direct-current (DC) signal. In particular, the protection circuit comprises a high-frequency-cutoff element, which has a first terminal connected to the signal terminal, and a Schottky diode, the anode of which is connected to ground and the cathode of which is connected to a second terminal of the high-frequency-cutoff element.

Once again by way of example, the patent application No. WO2008/091254 describes a protection circuit of a frequency-translation module, which comprises a first signal path, which is set between a transmission line and a first reference potential and has the function of conducting negative overvoltages that are generated between the transmission line and the first reference potential. The first signal path comprises a first diode and a first clamping diode; in addition, a second reference potential is coupled to a junction of the first diode and of the first clamping diode. Furthermore, the protection circuit comprises a second signal path, set between the transmission line and the first reference potential; the second signal path comprises a second diode and a second clamping diode and performs the function of conducting positive overvoltages that are generated between the transmission line and the first reference potential. A second reference potential is coupled to a junction of the second diode and of the second clamping diode.

In general, according to the operating band of the transceiver 1, two different types of electronic protection systems are available.

In particular, in the case where the operating band belongs to the so-called ultra-high-frequency (UHF) band, i.e., is higher than hundreds of megahertz, electronic protection systems for transceivers operating in the UHF band are used, which will be referred to in what follows as "UHF protection systems".

Typically, the UHF protection systems envisage the presence of a stub. For example, with reference once again to the transceiver 1, the stub is inserted along the connection between the antenna 5 and the circuitry to be protected. By way of example, in the case where the aforementioned connection is formed by a stretch of coaxial cable, the stub departs from the coaxial cable.

In greater detail, the stub is closed towards ground by means of a short circuit, and has a length equal to $\lambda/4$, where $\lambda$ is a design wavelength, typically equal to the wavelength that corresponds to a band-centre frequency, which is located at the centre of the operating band of the transceiver 1.

Operatively, at the band-centre frequency, the stub is electrically equivalent to an open circuit; it hence enables passage of electromagnetic signals from the antenna 5 to the circuitry to be protected. Instead, at frequencies progressively lower than the band-centre frequency, the stub progressively resembles a short-circuit, in such a way that the high-frequency (HF) spectral components of the disturbance, which usually have amplitudes greater than the components at higher frequencies, are short-circuited to ground, without reaching the circuitry to be protected.

In practice, UHF protection systems are based on the fact that the useful electromagnetic signals and the disturbance have different frequencies. In fact, the stub behaves as a bandpass filter, resonating with high impedance at the band-centre frequency, and filtering the spectral components of the disturbance that have frequencies lower than the operating band. In addition, UHF protection systems do not require electronic power components, i.e., ones capable of dissipating high powers, because the antennas of the transceivers, in so far as they are optimized for the UHF band, carry out a partial rejection of the HF spectral components of the disturbance.

In the case where the operating band belongs to the so-called HF band, i.e., it does not exceed hundreds of megahertz, electronic protection systems are used formed by electronic power components, which will be referred to hereinafter as "HF protection systems".

In particular, HF protection systems typically use power diodes, which are electrically arranged in such a way as to function as shunts with respect to the circuitry to be protected. Once again with reference to the transceiver 1, the aforementioned power diodes are connected to the antenna 5 and to the circuitry to be protected in such a way as to carry out clipping of the electromagnetic signals that pass on the connection between the antenna 5 and the circuitry to be protected. In other words, the power diodes are connected in such a way that, if the input voltage of the circuitry to be protected tends to exceed a threshold voltage, and hence the circuitry to be protected tends to absorb a current greater than an allowed maximum current, they clamp this input voltage to the threshold voltage, and absorb the current that exceeds the allowed maximum current, conveying it to ground.

Unlike UHF protection systems, in the case of HF protection systems the presence of electronic power components is necessary. In fact, the antennas of the radiocommunications apparatuses for which the HF protection systems are designed are optimized for the HF band, and hence do not carry out any filtering of the HF spectral components of the disturbance. The HF protection systems must hence be able to dissipate high powers.

The UHF protection systems and the HF protection systems described previously enable effective protection of radiocommunications apparatuses having operating bands comprised in the UHF band and HF band, respectively; however, they present certain drawbacks.

In particular, UHF protection systems operate effectively in the case of radiocommunications apparatuses having operating bands that, in addition to belonging to the UHF band, have bandwidths of the order of one octave. Instead, in the case of operating bands wider than one octave, the use of UHF protection systems entails a deterioration of the performance, since the stubs no longer behave as open circuits at the frequencies of the useful signals. In addition, the UHF protection systems do not guarantee protection in regard to disturbance in the UHF band.

On the other hand, the electronic power components used in HF protection systems generally introduce capacitive contributions so that is it is not possible to apply the HF protection systems when the operating bands belong to the UHF band.

In the past, the aforementioned drawbacks had a limited importance, since, traditionally, each radiocommunications apparatus was designed to operate in the respective operating band, this operating band generally having a limited amplitude. Consequently, it was possible to associate to each radiocommunications apparatus a respective protection system, alternatively of an HF or UHF type, according to the operating band of the radiocommunications apparatus itself. However, nowadays radiocommunications apparatuses have increasingly wider operating bands.

By way of example, known to the art are the so-called "software-defined radio (SDR) systems", which have very wide operating bands. In particular, if we define with fmin and fmax the lower limit and the upper limit of the operating band of a generic SDR system, fmax can be even three orders of magnitude higher than fmin. Consequently, protection systems of a known type do not guarantee, individually, an effective protection of SDR systems.

In the presence of operating bands that extend both in the HF band and in the UHF band, it is hence expedient to use both HF protection systems and UHF protection systems. For this purpose, it is, however, necessary to resort to one or more switches, for example formed by power relays. These switches perform the function of connecting to the radiocommunications. apparatus alternatively the HF protection systems or else the UHF protection systems, according to an operating frequency effectively used by the radiocommunications apparatus. This entails an inevitable increase of complexity of the protection systems.

DISCLOSURE OF INVENTION

The aim of the present invention is to provide a protection device for radiocommunications apparatuses that will overcome at least in part the drawbacks of the known art.

According to the present invention, a protection device and a radiocommunications apparatus are provided as defined, respectively, in claims 1 and 16.

BRIEF DESCRIPTION OF THE DRAWINGS

For a better understanding of the invention, embodiments thereof are now described, purely by way of non-limiting example and with reference to the attached drawings, wherein:

- Figure 1 shows a block diagram of a radio-frequency transceiver of a known type;
- Figure 2 shows a circuit diagram of a protection device according to the present invention;
- Figure 3 shows a cross section of a microstrip;
- Figure 4 shows an equivalent electrical circuit of a protection device according to the present invention;
- Figure 5 shows a Smith chart;
- Figure 6 shows a circuit diagram of a further protection device according to the present invention; and
- Figure 7 shows a block diagram of a radiocommunications apparatus.

BEST MODE FOR CARRYING OUT THE INVENTION

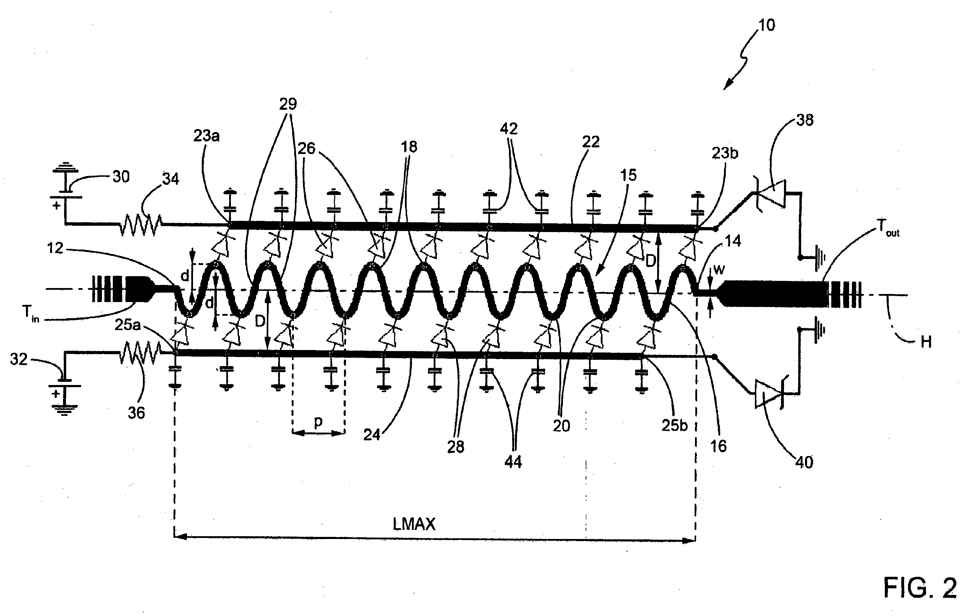

Figure 2 shows a protection device for radiocommunications apparatuses, which is designated as a whole by 10 and which will be referred to hereinafter as "protection device 10".

The protection device 10 comprises an input terminal 12 and an output terminal 14, connected between which is a microstrip 15, which is formed, as is known, by a ground plane 17 (Figure 3) and by a strip of conductive material, which is designated by 16 and which will be referred to hereinafter as "path 16". In particular, the path 16 has a width w, and is separated from the ground plane 17 by a dielectric layer 13 having a thickness s. The ratio w/s can be lower than one.

In detail, the path 16 lies in a plane and defines a serpentine having pitch p. In practice, if we define a longitudinal axis H along which the serpentine develops, the path 16 has the shape of a portion of sinusoid with amplitude equal to a distance d, and a period equal to the pitch p; in addition, the path 16 defines a number n of points of maximum 18 and an equal number n of points of minimum 20. These points of maximum and minimum 18, 20 are all at a distance d from the longitudinal axis H, but are arranged on opposite sides with respect to the longitudinal axis H itself. Furthermore, both the input terminal 12 and the output terminal 14 lie along the longitudinal axis H, arranged apart by a length LMAX.

The protection device 10 further comprises a first strip of conductive material and a second strip of conductive material, which are designated, respectively, by 22 and 24, and which extend, respectively, between a first terminal 23a and a second terminal 23b, and between a third terminal 25a and a fourth terminal 25b. For reasons described below, hereinafter the first and second strips of conductive material 22, 24 will be referred to as positive virtual ground 22 and negative virtual ground 24.

In detail, the positive virtual ground 22 and the negative virtual ground 24 lie in the same plane in which the path 16 lies, and are arranged parallel with respect to the longitudinal axis H. In addition, the positive virtual ground 22 and the negative virtual ground 24 are both at a distance D from the longitudinal axis H, and are arranged on opposite sides with respect to the longitudinal axis H. In particular, the positive virtual ground 22 is arranged on the same side where the points of maximum 18 are located, whilst the negative virtual ground 24 is arranged on the same side where the points of minimum 20 are located. In addition, the distance D is greater than the distance d, in such a way that the positive virtual ground 22 and the negative virtual ground 24 are not in ohmic contact with the path 16, which is in fact comprised between the positive virtual ground 22 and the negative virtual ground 24.

The protection device 10 further comprises a plurality of first diodes 26 and a plurality of second diodes 28. In particular, in the example shown in Figure 2, the protection device 10 comprises n first diodes 26 and n second diodes 28, both the first diodes 26 and the second diodes 28 being, for example, Schottky diodes.

In greater detail, each of the first diodes 26 has the respective anode connected to a corresponding point of maximum 18 of the path 16, whilst the respective cathode is connected to the positive virtual ground 22. In addition, each of the second diodes 28 has its respective anode connected to the negative virtual ground 24, whilst the respective cathode is connected to a corresponding point of minimum 20.

In practice, the path 16 is formed by a succession of portions of path, which will be referred to hereinafter as "connection portions 29". Each connection portion 29 connects a respective pair of diodes formed by a first diode 26 and by a second diode 28 adjacent to one another, i.e., connected between a point of maximum 18 and a consecutive point of minimum 20 along the path 16. The connection portions 29 have one and the same length l; consequently, the diodes of any pair of first diodes 26 adjacent to one another are arranged at a distance $2 \cdot l$, as likewise the diodes of any pair of second diodes 28 adjacent to one another.

The protection device 10 further comprises a first voltage generator 30 and a second voltage generator 32, and a first pull-up resistor 34 and a second pull-up resistor 36.

In detail, the negative pole of the first voltage generator 30 is connected to ground, whilst the positive pole is connected to a first node of the first pull-up resistor 34, the second node of the first pull-up resistor 34 being connected to the first terminal 23a. Instead, the positive pole of the second voltage generator 32 is connected to ground, whilst the negative pole is connected to a first node of the second pull-up resistor 36, the second node of the second pull-up resistor 36 being connected to the third terminal 25a.

The protection device 10 further comprises a first transient-voltage-suppression diode and a second transient-voltage-suppression diode, which are also known as "transorbs" and are designated by 38 and 40, respectively.

In greater detail, the first and second transorbs 38, 40 are both of a unidirectional type; i.e., they behave electrically as Zener diodes capable of conducting high currents. In particular, the cathode of the first transorb 38 is connected to the second terminal 23b, whilst the anode of the first transorb 38 is connected to ground. As regards, instead, the second transorb 40, the anode is connected to the fourth terminal 25b, whilst the cathode is connected to ground.

The protection device 10 further comprises a plurality of first reference capacitors 42 and a plurality of second reference capacitors 44. In particular, in the example shown in Figure 2, the protection device 10 comprises n first reference capacitors 42 and n second reference capacitors 44, in such a way that corresponding to each between the first reference capacitors 42 is one between the first diodes 26, and corresponding to each between the second reference capacitors 44 is one between the second diodes 28.

In greater detail, each of the first reference capacitors 42 is connected between ground and a corresponding point of the positive virtual ground 22. In particular, each of the first reference capacitors 42 is connected to the positive virtual ground 22 in the proximity of the point in which the cathode of the corresponding first diode 26 is connected to the positive virtual ground 22 itself. Likewise, each of the second reference capacitors 44 is connected between ground and a corresponding point of the negative virtual ground 24. In particular, each of the second reference capacitors 44 is connected to the negative virtual ground 24 in the proximity of the point in which the anode of the corresponding second diode 28 is connected to the negative virtual ground 24 itself.

In order to prevent parasitic resonances, between each of the first and second reference capacitors 42, 44 and ground there can be connected a respective resistor (not shown), having a resistance comprised between 0.5 O and 1 O. Alternatively, it is possible to use as first and second reference capacitors 42, 44 capacitors having a quality factor Q lower than two hundred.

Operatively, the protection device 10 can be connected between an antenna and a generic circuitry to be protected of a radiocommunications apparatus. For example, the input terminal 12 can be connected, by means of a first transmission line $T_{in}$, to the antenna, whilst the output terminal 14 can be connected, by means of a second transmission line $T_{out}$, to the circuitry to be protected (or vice versa). The first and second transmission lines $T_{in}$, $T_{out}$ can have one and the same characteristic impedance, for example 50 O, which will be referred to hereinafter as "connection characteristic impedance $Z_0$". Consequently, the microstrip 15, and in particular the path 16, function as connection between the antenna and the circuitry to be protected.

In detail, the first voltage generator 30 and the first transorb 38 bias the positive virtual ground 22 at a maximum voltage Vmax, whilst the second voltage generator 32 and the second transorb 40 bias the negative virtual ground 24 at a minimum voltage Vmin. In particular, assuming that the first and second transorbs 38, 40 have one and the same first conduction voltage Vb1 (also known as breakdown voltage and understood as voltage between anode and cathode, which is hence positive), and that the first and second voltage generators 30, 32 generate voltages higher in magnitude than Vb1, we have Vmax = Vb1 and Vmin = -Vb1. The path 16 has instead zero voltage.

It follows that, if the voltage of a generic point of the path 16 exceeds Vmax, for example on account of an electromagnetic disturbance, or else because the antenna receives high-power signals, the first diodes 26 go into conduction and are traversed by respective currents; in addition, a current as a whole equal to the sum of the currents that traverse the first diodes 26 is short-circuited to ground through the first transorb 38.

Likewise, if the voltage of a generic point of the path 16 is lower (in magnitude and sign) than Vmin, the second diodes 28 go into conduction and are traversed by respective currents; in addition, a current as a whole equal to the sum of the currents that traverse the second diodes 28 is short-circuited to ground through the second transorb 40.

In practice, if we designate by "RF signal" in general any electromagnetic signal that follows the path 16, it happens that, whenever the voltage of the RF signal exceeds, in magnitude, the first conduction voltage Vb1, the path 16 is short-circuited to ground, alternatively through the first diodes 26 or through the second diodes 28. Instead, in the case where the voltage of the RF signal does not exceed, in magnitude, the first conduction voltage Vb1, both the first diodes 26 and the second diodes 28 are reversely biased.

In use, each diode of the first and second diodes 26, 28 can withstand a maximum diode current $I_{d-max}$. Furthermore, the protection device 10 can be made in such a way as to have negligible dimensions with respect to the wavelength of the most significant spectral components of the disturbance, which are typically negligible for frequencies higher than 60 MHz; in fact the length LMAX can be less than 4 or 5 cm. Consequently, it is legitimate to assume that, from the standpoint of disturbance, the first diodes 26, as likewise the second diodes 28, work in parallel. Hence, the protection device 10 is capable of short-circuiting to ground a current equal to $n \cdot I_{d-max}$, hence dissipating a power equal to $n \cdot V_\gamma \cdot I_{d-max}$, where $V_\gamma$ is the threshold voltage of the first and second diodes 26, 28. As the number of first and second diodes 26, 28 increases or decreases, the power that the protection device 10 is able to dissipate proportionally increases or decreases. Furthermore, in the case where the disturbance is of a non-repetitive type, i.e., having a duration of less than 2 $\mu$s and a period of not less than 10 s, the first and second diodes 26, 28 can withstand currents up to ten times higher than the maximum diode current $I_{d-max}$, hence enabling, for this type of disturbance, short-circuiting to ground of a current up to ten times higher than $n \cdot I_{d-max}$.

As mentioned previously, both the first diodes 26 and the second diodes 28 can be Schottky diodes, which are characterized by a high maximum diode current $I_{d-max}$, a low threshold voltage $V_\gamma$, a high triggering speed, and moreover a low parasitic capacitance $C_d$ (lower than 0.5 pF).

Irrespective of the type of diode, the parasitic capacitance $C_d$ inevitably introduced by the first and second diodes 26, 28 is compensated in a distributed way by the path 16 so as to enable use of the protection device 10 also throughout the UHF band.

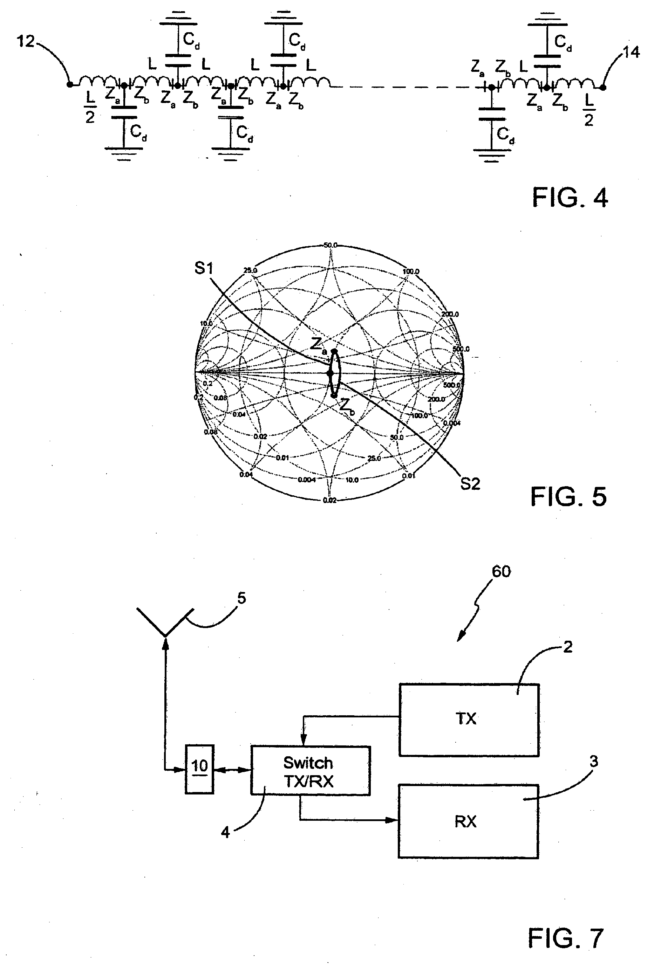

Figure 4 shows an (ideal) equivalent electrical circuit for the path 16 and for the first and second diodes 26, 28. In particular, it may be noted how each connection portion 29 introduces an inductance L. It may moreover be noted how the path 16 is connected to the input terminal 12 and to the output terminal 14 by means of a first connecting portion and a second connecting portion, each having a length equal to 1/2, in such a way as to introduce, each of them, an inductance equal to L/2.

In practice, the parasitic capacitance $C_d$ of the first and second diodes 26, 28 is compensated in a distributed way by the inductance associated to the microstrip 15, and in particular to the path 16, in such a way that, during propagation along the microstrip 15, the RF signal does not undergo any alteration, notwithstanding the presence of the first and second diodes 26, 28. In other words, if the RF signal is such that the voltage on the path 16 is comprised between Vmin and Vmax, to a first approximation it propagates along the path 16 as if the microstrip 15 were ideal, i.e., as if the first and second diodes 26, 28 were absent.

Furthermore, from the standpoint of the RF signal, both the first reference capacitors 42 and the second reference capacitors 44 perform the function of supplying to the first diodes 26 and to the second diodes 28, respectively, a ground reference. In other words, from the standpoint of the RF signal that flows along the path 16, each parasitic capacitance $C_d$ is arranged in series with a corresponding first reference capacitor 42 or second reference capacitor 44. Using first and second reference capacitors 42, 44 having capacitances higher by at least one order of magnitude than the parasitic capacitance $C_d$ of the first and second diodes 26, 28, we obtain that, for the RF signal, each of the aforementioned points of maximum 18 and points of minimum 20 is connected to ground through an equivalent capacitor, which has a capacitance approximately equal to the parasitic capacitance $C_d$. Purely by way of example, assuming that the capacitance $C_d$ is approximately equal to 0.5 pF, each of the first and second reference capacitors 42, 44 can have a capacitance comprised between 10 pF and 100 pF.

Once again at a design level, the width w of the path 16, the thickness s, and the material of the dielectric layer 13 can be chosen in such a way that the microstrip 15 has a characteristic impedance $Z_\infty$ greater than or equal to twice the connection characteristic impedance $Z_\infty$. For example, if $Z_0 = 50\Omega$, it is possible to set $Z_\infty = 125\Omega$. In this way, each connection portion 29 approximates an inductor in a quasi-ideal way. Furthermore, in order to compensate the parasitic capacitances $C_d$ introduced by the first and second diodes 26, 28, i.e., prevent the reactances introduced by them from causing a progressive departure from $Z_0$, of the impedance of the path 16, the inductance L can be chosen on the basis of the following relation:

$$L = -\frac{X_{Cd}^2 + \sqrt{X_{Cd}^2 - Z_0^2}}{\pi F_{max}} \qquad (1)$$

where $F_{max}$ is a maximum frequency at which use of the protection device 10 is envisaged, and $X_{cd}$ is the reactance introduced by a single first diode 26 or second diode 28 at said maximum frequency $F_{max}$, as follows:

$$X_{Cd} = -j \frac{1}{2\pi F_{max} \times C_d} \qquad (2)$$

As a function of the inductance L it is then possible to determine, in a way in itself known, the geometrical characteristics of the serpentine defined by the path 16, and in particular the length 1 of the connection portions 29. For example, to a first approximation the length 1 can be determined recalling that the microstrip 15 introduces approximately an inductance of 1 nH for each millimetre of length, or else resorting to readily available microwave circuit simulators.

It is moreover possible to show that, if the relations (1) and (2) are respected, at the maximum frequency $F_{max}$ the impedance of the path 16 is such that, proceeding from the input terminal 12 to the output terminal 14, immediately before each first diode 26 or second diode 28, there is an impedance $Z_a$, whilst immediately after each first diode 26 or second diode 28, there is an impedance $Z_b$. Furthermore, the relations $Z_a \cong Z_0 + jX_a$, $Z_b \cong Z_0 + jX_b$ apply, where $X_a = -X_b = j \cdot 2\pi F_{max} \cdot L$.

In practice, if $Z_\infty \geq 2Z_0$, the impedance of any point of the path 16 is comprised between $Z_a$ and $Z_b$, and in particular lies on a first arc of circumference S1 or on a second arc of circumference S2 of a Smith chart, as shown in Figure 5, where it is assumed that $Z_0 = 50\ O$.

In particular, both the first arc of circumference S1 and the second arc of circumference S2 have as extremes the impedances (normalized with respect to $Z_0$) $Z_a$ and $Z_b$; moreover, the first arc of circumference S1 belongs to a circumference passing through the point of infinite impedance and through the point of unit normalized impedance, whilst the second arc of circumference S2 belongs to a circumference passing through the point of zero impedance, and through the (normalized) points of impedance $Z_a$ and $Z_b$. In other words, given the same inductance L, the length 1, and hence the length LMAX of the protection device 10, is minimized with respect to the case where the microstrip 15 has a characteristic impedance $Z_\infty < 2Z_0$.

As regards, instead, the return loss (RL) caused by the protection device 10, it is given by

$$RL = 10 \cdot Log\left(\frac{Z_b - Z_0}{Z_b + Z_0}\right)^2 \qquad (3)$$

Consequently, it is possible to choose the number n of first and second diodes 26, 28 as a function of the power that it is desired to dissipate by the protection device 10 and of a maximum return loss.

The embodiment shown in Figure 2 can advantageously be applied to radio-frequency receivers and transmitters, i.e., to radiocommunications apparatuses such that the circuitry to be protected comprises, alternatively, a receiver stage or a transmitter stage. In fact, generally the transmitter stage transmits to the antenna high-power signals; consequently, the maximum voltage Vmax and the minimum voltage Vmin should advantageously have a high magnitude to prevent the protection device 10 from clamping these high-power signals. Instead, in use, the receiver stage receives from the antenna low-power signals, in such a way that the maximum voltage Vmax and the minimum voltage Vmin can have a reduced magnitude so as to optimize the protection afforded by the protection device 10, without in any case clamping said low-power signals.

Purely by way of example, in the case where the circuitry to be protected comprises just the transmitter stage, the first conduction voltage Vb1 can be equal to 30 V. Furthermore, the first and second voltage generators 30, 32 can supply both a voltage equal to 33 V. Finally, the first and second pull-up resistors 34, 36 can have a resistance equal to 10 kO.

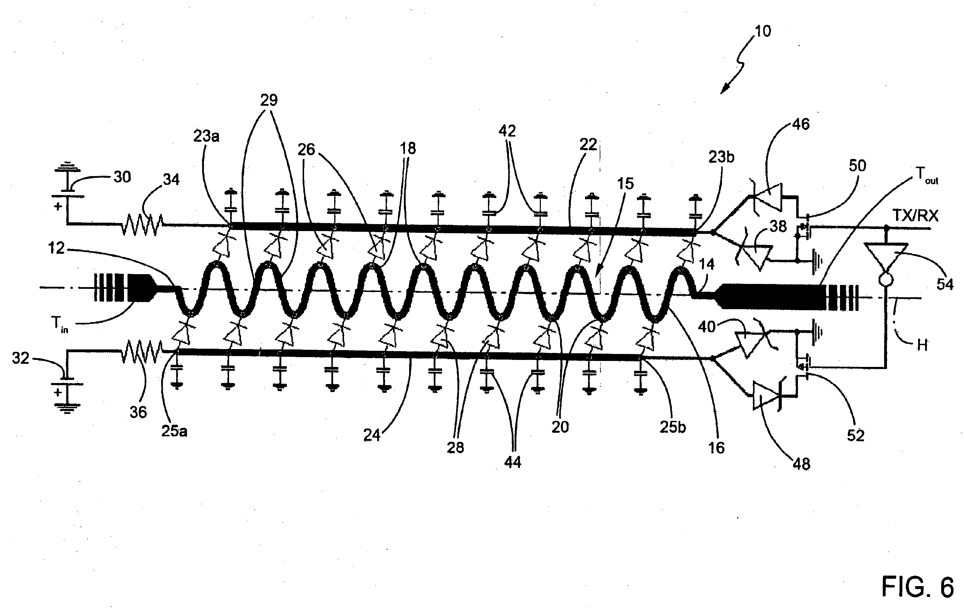

In the case of radiocommunications apparatuses comprising both the receiver stage and the transmitter stage, it is possible to use the embodiment shown in Figure 6.

In particular, the protection devise 10 comprises a third transorb 46 and a fourth transorb 48. Furthermore, the protection device 10 comprises a first transistor 50 and a second transistor 52, a control terminal TX/RX, and a logic inverter 54.

In detail, the third and fourth transorbs 46, 48 are both of a unidirectional type; hence, they also behave electrically as Zener diodes, like the first and second transorbs 38, 40. In addition, the third and fourth transorbs 46, 48 are the same as one another, and have one and the same second conduction voltage Vb2, different from the first conduction voltage Vb1. As regards, instead, the first and second transistors 50, 52, they both perform the function of switches. In addition, the first transistor 50 is an N-channel MOSFET, whilst the second transistor 52 is a P-channel MOSFET.

In greater detail, the third transorbs 46 has its cathode connected to the second terminal 23b, and its anode connected to a first conduction terminal (the distinction between source terminal and drain terminal is not important for the purposes of the present invention) of the first transistor 50. Furthermore, a second conduction terminal of the first transistor 50 and a bulk terminal of the first transistor 50 are connected to ground, whilst the gate terminal of the first transistor 50 is connected to the control terminal TX/RX.

The fourth transorb 48 has its anode connected to the fourth terminal 25b, and its cathode connected to a first conduction terminal of the second transistor 52. Furthermore, a second conduction terminal of the second transistor 52 and a bulk terminal of the second transistor 52 are connected to ground, whilst the gate terminal of the second transistor 52 is connected to an output terminal of the logic inverter 54, the input terminal of which is connected to the control terminal TX/RX.

Operatively, the maximum voltage Vmax and the minimum voltage Vmin to which the positive virtual ground 22 and the negative virtual ground 24 are biased, and in particular the magnitude of the maximum voltage Vmax and of the minimum voltage Vmin, are controlled by means of the control terminal TX/RX, as described in greater detail in what follows, where it is assumed, by way of example, that the second conduction voltage Vb2 is lower than the first conduction voltage Vb1.

In detail, when the control terminal TX/RX assumes a logic value "0", i.e., a value of voltage such that the first transistor 50 is in a state of inhibition, also the second transistor 52 is inhibited, on account of the logic inverter 54. Consequently, the first transorb 38 is connected to ground, whilst the third transorb 46 is floating. It follows that the maximum voltage Vmax of the positive virtual ground 22 is equal to the first conduction voltage Vb1. Furthermore, the second transorb 46 is connected to ground, whilst the fourth transorb 48 is floating. Consequently, the minimum voltage Vmin of the negative virtual ground 24 is equal to - Vb1.

Instead, when the control terminal TX/RX assumes a logic value "1", i.e., a value of voltage such that the first transistor 50 is in a state of conduction, also the second transistor 52 is in conduction, on account of the logic inverter 54. Consequently, both the first and third transorbs 38, 46 are connected to ground, as likewise the second and fourth transorbs 40, 48. It follows that the maximum voltage Vmax of the positive virtual ground 22 is equal to the lower voltage between the first and second conduction voltages Vb1, Vb2; in the case in point, on the basis of the previous assumptions, the maximum voltage Vmax is equal to the second conduction voltage Vb2. Likewise, the minimum voltage Vmin of the negative virtual ground 24 is equal, in magnitude, to the lower voltage between the first and second conduction voltages Vb1, Vb2a; in the case in point, on the basis of the previous assumptions, the minimum voltage Vmin is equal to -Vb2.

In practice, in the case of radiocommunications apparatuses provided both with a transmitter stage and with a receiver stage, it is possible to connect the embodiment shown in Figure 6 in the way represented in Figure 7.

In particular, Figure 7 shows a radiocommunications apparatus 60, which comprises the antenna 5, the transmitter stage 2, the receiver stage 3, and the switching stage 4. Furthermore, the radiocommunications apparatus 60 comprises the protection device 10, in the embodiment shown in Figure 6, which is connected between the antenna 5 and the switching stage 4.

Operatively, assuming once again Vb2<Vb1, when the switching stage 4 connects the transmitter stage 2 to the antenna 5, it is possible to set on the control terminal TX/RX the logic value "0" in such a way that the protection device 10 enters into action only for voltages higher, in magnitude, than Vb1. Instead, when the switching stage 4 connects the receiver stage 3 to the antenna 5, it is possible to set on the control terminal TX/RX the logic value "1" in such a way that the protection device 10 enters into action already for voltages higher, in magnitude, than Vb2. In this way, it is possible to adapt the protection device 10 to the real needs of the circuitry to be protected. In fact, as mentioned previously, it may be advantageous, when the antenna 5 is connected to the transmitter stage 2, for the maximum voltage Vmax and the minimum voltage Vmin to have a magnitude greater than when the antenna 5 is connected to the receiver stage 3. This occurs because, during normal operation of a transceiver, the transmitter stage 2 generates signals of large amplitude, whilst the receiver stage 3 receives signals of small amplitude.

The advantages that the protection device 10 affords emerge clearly from the foregoing description. In particular, the protection device 10 enables protection of radiocommunications apparatuses having very wide operating bands. Furthermore, the protection device 10 entails low insertion losses and return losses.

Finally, it is evident that modifications and variations may be made to the protection device 10 described, without thereby departing from the scope of the present invention, as defined by the annexed claims.

For example, the path 16 can have a non-sinusoidal shape, but, for example, a triangular-wave shape. Alternatively, the path 16 can also be rectilinear, even though this entails an increase of LMAX. Furthermore, instead of the microstrip 15, it is possible to use a coplanar line, or else another type of transmission line for radio-frequency signals.

As regards, instead, the transorbs, it is possible to use voltage generators in their place. Furthermore, the transorbs can be absent, as likewise the first and second voltage generators 30, 32 and the first and second pull-up resistors 34, 36, since both the positive virtual ground and the negative virtual ground 22, 24 can be directly connected to ground. In this case, the protection device 10 enters into action in the case where the voltage of a generic point of the path 16 exceeds, in magnitude, the threshold voltage $V_\gamma$ of the first diodes 26 and of the second diodes 28.

Finally, the connection portions 29 can have lengths different from one another; for example, the lengths of the connection portions 29 can be comprised in the interval $1 \pm 0.1 \cdot 1$.

## Claims

1. A protection device for radiocommunications apparatuses, comprising:

   - a transmission line (15) for radio-frequency signals;
   - a first strip-shaped conductive element (22);
   - first biasing means (30, 34, 38; 46, 50), configured for biasing the first conductive element (22) at a first biasing voltage (Vmax); and
   - a plurality of first voltage-controlled switches (26), connected between the first conductive element (22) and the transmission line (15).

2. The protection device according to claim 1, further comprising a reference-potential line set at a reference potential, and wherein the first biasing means (30, 34, 38; 46, 50) comprise a first voltage generator (30), connected to a first end of the first conductive element (22), and a first absorption switch (38; 46, 50), connected between a second end of the first conductive element (22) and the reference-potential line.

3. The protection device according to claim 2, further comprising:

   - a second strip-shaped conductive element (24);
   - second biasing means (32, 36, 40; 48, 52), which are configured for biasing the second conductive element (24) at a second biasing voltage (Vmin) and include a second voltage generator (32), connected to a first end of the second conductive element (24), and a second absorption switch (40; 48, 52), connected between a second end of the second conductive element (24) and the reference-potential line; and
   - a plurality of second voltage-controlled switches (28), connected between the second conductive element (24) and the transmission line (15).

4. The protection device according to claim 3, wherein the transmission line (15) comprises a path (16) of conductive material, and the first voltage-controlled switches are formed by first diodes (26), each first diode (26) having its anode connected to the path (16) and its cathode connected to the first conductive element (22); and wherein the second voltage-controlled switches are formed by second diodes (28), each second diode (28) having its cathode connected to the path (16) and its anode connected to the second conductive element (24).

5. The protection device according to claim 4, wherein the first diodes (26) are connected to the path (16) in respective first points (18) of the path (16), arranged at a distance from one another along the path (16); wherein the second diodes (28) are connected to the path (16) in respective second points (20) of the path (16), arranged at a distance from one another along the path (16); and wherein the mutual distances between pairs of first adjacent points (18) of the path (16) and between pairs of second adjacent points (20) of the path (16) are the same as one another but for a difference of $\pm 10\%$.

6. The protection device according to claim 5, wherein the first and second points (18, 20) of the path (16) are arranged alternated along the path (16).

**7.** The protection device according to claim 6, wherein each second point (20) of the path (16) is arranged in a central position with respect to a respective pair of first adjacent points (18).

**8.** The protection device according to any one of claims 4 to 7, wherein the first and second absorption switches comprise, respectively, a first transorb (38) and a second transorb (40), the first transorb (38) having its cathode connected to the first conductive element (22) and its anode connected to the reference-potential line, the second transorb (40) having its anode connected to the second conductive element (24) and its cathode connected to the reference-potential line.

**9.** The protection device according to claim 8, wherein the first and second absorption switches further comprise a third transorb (46) and a fourth transorb (48); the first and second transorbs (38, 40) having a first conduction voltage (Vb1), the third and fourth transorbs (46, 48) having a second conduction voltage (Vb2) different from the first conduction voltage (Vb1).

**10.** The protection device according to claim 9, further comprising a first transistor (50) and a second transistor (52) of a MOSFET type, and wherein:

- the third transorb (46) has its cathode connected to the first conductive element (22) and its anode connected to a first conduction terminal of the first transistor (50);
- the fourth transorb (48) has its anode connected to the second conductive element (24) and its cathode connected to a first conduction terminal of the second transistor (52); and
- a second conduction terminal of the first transistor (50) and a second conduction terminal of the second transistor (52) are connected to the reference-potential line.

**11.** The protection device according to claim 10, further comprising a control node (TX/RX) and an inverter (54), the first transistor (50) having a control terminal connected to the control node (TX/RX), the inverter (54) having an input terminal connected to the control node (TX/RX) and an output terminal connected to a control terminal of the second transistor (52).

**12.** The protection device according to any one of claims 4 to 11, wherein the path (16) has a sinusoidal shape.

**13.** The protection device according to claim 12, wherein the first and second conductive elements (22, 24) are arranged on opposite sides with respect to the path (16).

**14.** The protection device according to any one of claims 4 to 13, wherein the first and second diodes (26, 28) are Schottky diodes.

**15.** The protection device according to any one of claims 3 to 14, further comprising:

- a plurality of first reference capacitors (42), connected between the first conductive element (22) and the reference-potential line; and
- a plurality of second reference capacitors (44), connected between the second conductive element (24) and the reference-potential line.

**16.** A radiocommunications apparatus comprising a protection device (10) according to any one of the preceding claims, and further comprising an antenna (5) and at least one electronic unit chosen from between a transmitting stage (2) and a receiving stage (3), the protection device (10) being connected between the antenna (5) and the electronic unit.

**17.** The radiocommunications apparatus according to claim 16, wherein the transmission line (15) is connected to an external line for radio-frequency signals ($T_{in}$, $T_{out}$), which has a first characteristic impedance ($Z_0$), the transmission line (15) having a second characteristic impedance ($Z_\infty$), at least equal to twice the first characteristic impedance ($Z_0$).

**Patentansprüche**

**1.** Schutzvorrichtung für Funkkommunikationsvorrichtungen, die aufweist:

eine Übertragungsleitung (15) für Funkfrequenzsignale;
ein erstes streifenförmiges leitendes Element (22);
eine erste Vorspannungseinrichtung (30, 34, 38; 46, 50), die zum Vorspannen des ersten leitenden Elementes (22) auf eine erste Vorspannung (Vmax) ausgelegt ist; und
mehrere erste spannungsgesteuerte Schalter (26), die zwischen das erste leitende Element (22) und die Übertragungsleitung (15) geschaltet sind.

2.  Schutzvorrichtung nach Anspruch 1, die außerdem eine Bezugspotenzialleitung aufweist, die auf ein Bezugspotenzial gelegt ist, und wobei die erste Vorspannungseinrichtung (30, 34, 38; 46, 50) einen ersten Spannungsgenerator (30), der mit einem ersten Ende des ersten leitenden Elementes (22) verbunden ist, und einen ersten Absorptionsschalter (38; 46, 50) aufweist, der zwischen ein zweites Ende des ersten leitenden Elementes (22) und die Bezugspotenzialleitung geschaltet ist.

3.  Schutzvorrichtung nach Anspruch 2, die außerdem aufweist:

    ein zweites streifenförmiges leitendes Element (24);
    eine zweite Vorspannungseinrichtung (32, 36, 40; 48, 52), die zum Vorspannen des zweiten leitenden Elementes (24) auf eine zweite Vorspannung (Vmin) ausgelegt ist und einen zweiten Spannungsgenerator (32), der mit einem ersten Ende des zweiten leitenden Elementes (24) verbunden ist, und einen zweiten Absorptionsschalter (40; 48, 52) enthält, der zwischen ein zweites Ende des zweiten leitenden Elementes (24) und die Bezugspotenzialleitung geschaltet ist; und
    mehrere zweite spannungsgesteuerte Schalter (28), die zwischen das zweite leitende Element (24) und die Übertragungsleitung (15) geschaltet sind.

4.  Schutzvorrichtung nach Anspruch 3, wobei die Übertragungsleitung (15) einen Pfad (16) aus einem leitenden Material aufweist und die ersten spannungsgesteuerten Schalter durch erste Dioden (26) ausgebildet sind, wobei jede erste Diode (26) eine Anode aufweist, die mit dem Pfad (16) verbunden ist, und eine Kathode aufweist, die mit dem ersten leitenden Element (22) verbunden ist; und wobei die zweiten spannungsgesteuerten Schalter durch zweite Dioden (28) ausgebildet sind, wobei jede zweite Diode (28) eine Kathode aufweist, die mit dem Pfad (16) verbunden ist, und eine Anode aufweist, die mit dem zweiten leitenden Element (24) verbunden ist.

5.  Schutzvorrichtung nach Anspruch 4, wobei die ersten Dioden (26) mit dem Pfad (16) an jeweiligen ersten Punkten (18) des Pfads (16) verbunden sind, die mit einem Abstand zueinander entlang des Pfads (16) angeordnet sind; wobei die zweiten Dioden (28) mit dem Pfad (16) an jeweiligen zweiten Punkten (20) des Pfads (16) verbunden sind, die mit einem Abstand zueinander entlang des Pfades (16) angeordnet sind; und wobei die Abstände zwischen Paaren erster benachbarter Punkte (18) des Pfades (16) und zwischen Paaren zweiter benachbarter Punkte (20) des Pfades (16) innerhalb einer Differenz von $\pm 10$ % gleich sind.

6.  Schutzvorrichtung nach Anspruch 5, wobei die ersten und zweiten Punkte (18, 20) des Pfades (16) abwechselnd entlang des Pfades (16) angeordnet sind.

7.  Schutzvorrichtung nach Anspruch 6, wobei jeder zweite Punkt (20) des Pfades (16) an einer Mittelposition in Bezug auf ein jeweiliges Paar von ersten benachbarten Punkten (18) angeordnet ist.

8.  Schutzvorrichtung nach einem der Ansprüche 4 bis 7, wobei die ersten und zweiten Absorptionsschalter jeweils einen ersten Transorber (38) und einen zweiten Transorber (40) aufweisen, wobei der erste Transorber (38) eine Kathode aufweist, die mit dem ersten leitenden Element (22) verbunden ist, und eine Anode aufweist, die mit der Bezugspotenzialleitung verbunden ist, und wobei der zweite Transorber (40) eine Anode aufweist, die mit dem zweiten leitenden Element (24) verbunden ist, und eine Kathode aufweist, die mit der Bezugspotenzialleitung verbunden ist.

9.  Schutzvorrichtung nach Anspruch 8, wobei die ersten und zweiten Absorptionsschalter außerdem einen dritten Transorber (46) und einen vierten Transorber (48) aufweisen, wobei die ersten und zweiten Transorber (38, 40) eine erste Leitungsspannung (Vb1) aufweisen, wobei die dritten und vierten Transorber (46, 48) eine zweite Leitungsspannung (Vb2) aufweisen, die sich von der ersten Leitungsspannung (Vb1) unterscheidet.

10. Schutzvorrichtung nach Anspruch 9, die außerdem einen ersten MOSFET-Transistor (50) und einen zweiten MOSFET-Transistor (52) aufweist, und wobei

**EP 2 484 017 B1**

der dritte Transorber (46) eine Kathode aufweist, die mit dem ersten leitenden Element (22) verbunden ist, und eine Anode aufweist, die mit einem ersten Leitungsanschluss des ersten Transistors (50) verbunden ist;
der vierte Transorber (48) eine Anode aufweist, die mit dem zweiten leitenden Element (24) verbunden ist, und eine Kathode aufweist, die mit einem ersten Leitungsanschluss des zweiten Transistors (52) verbunden ist; und
ein zweiter Leitungsanschluss des ersten Transistors (50) und ein zweiter Leitungsanschluss des zweiten Transistors (52) mit der Bezugspotenzialleitung verbunden sind.

11. Schutzvorrichtung nach Anspruch 10, die außerdem einen Steuerknoten (TX/RX) und einen Inverter (54) aufweist, wobei der erste Transistor (50) einen Steueranschluss aufweist, der mit dem Steuerknoten (TX/RX) verbunden ist, wobei der Inverter (54) einen Eingangsanschluss aufweist, der mit dem Steuerknoten (TX/RX) verbunden ist, und einen Ausgangsanschluss aufweist, der mit einem Steueranschluss des zweiten Transistors (52) verbunden ist.

12. Schutzvorrichtung nach einem der Ansprüche 4 bis 11, wobei der Pfad (16) eine Sinusform aufweist.

13. Schutzvorrichtung nach Anspruch 12, wobei die ersten und zweiten leitenden Elemente (22, 24) in Bezug auf den Pfad (16) auf gegenüberliegenden Seiten angeordnet sind.

14. Schutzvorrichtung nach einem der Ansprüche 4 bis 13, wobei die ersten und zweiten Dioden (26, 28) Schottky-Dioden sind.

15. Schutzvorrichtung nach einem der Ansprüche 3 bis 14, die außerdem aufweist:

mehrere erste Bezugskondensatoren (42), die zwischen das erste leitende Element (22) und die Bezugspotenzialleitung geschaltet sind; und
mehrere zweite Bezugskondensatoren (44), die zwischen das zweite leitende Element (24) und die Bezugspotenzialleitung geschaltet sind.

16. Funkkommunikationsvorrichtung, die eine Schutzvorrichtung (10) nach einem der vorhergehenden Ansprüche aufweist, und die außerdem eine Antenne (5) und mindestens eine elektronische Einheit, die aus einer Sendestufe (2) und einer Empfangsstufe (3) ausgewählt wird, aufweist, wobei die Schutzvorrichtung (10) zwischen die Antenne (5) und die elektronische Einheit geschaltet ist.

17. Funkkommunikationsvorrichtung nach Anspruch 16, wobei die Übertragungsleitung (15) mit einer externen Leitung für Funkfrequenzsignale ($T_{in}$, $T_{out}$) verbunden ist, die eine erste charakteristische Impedanz ($Z_0$) aufweist, wobei die Übertragungsleitung (15) eine zweite charakteristische Impedanz ($Z_\infty$) aufweist, die mindestens gleich dem Zweifachen der ersten charakteristischen Impedanz ($Z_0$) beträgt.

**Revendications**

1. Dispositif de protection pour appareils de radiocommunications, comprenant :

- une ligne de transmission (15) pour des signaux radiofréquences ;
- un premier élément conducteur en forme de bande (22) ;
- de premiers moyens de polarisation (30, 34, 38 ; 46, 50), configurés pour polariser le premier élément conducteur (22) à une première tension de polarisation (Vmax) ; et
- une pluralité de premiers commutateurs commandés en tension (26), connectés entre le premier élément conducteur (22) et la ligne de transmission (15).

2. Dispositif de protection selon la revendication 1, comprenant en outre une ligne à potentiel de référence réglée à un potentiel de référence, et dans lequel les premiers moyens de polarisation (30, 34, 38 ; 46, 50) comprennent un premier générateur de tension (30), connecté à une première extrémité du premier élément conducteur (22), et un premier commutateur d'absorption (38 ; 46, 50), connecté entre une seconde extrémité du premier élément conducteur (22) et la ligne à potentiel de référence.

3. Dispositif de protection selon la revendication 2, comprenant en outre :

- un second élément conducteur en forme de bande (24) ;

- de seconds moyens de polarisation (32, 36, 40 ; 48, 52), qui sont configurés pour polariser le second élément conducteur (24) à une seconde tension de polarisation (Vmin) et incluent un second générateur de tension (32), connecté à une première extrémité du second élément conducteur (24), et un second commutateur d'absorption (40 ; 48, 52), connecté entre une seconde extrémité du second élément conducteur (24) et la ligne à potentiel de référence ; et
- une pluralité de seconds commutateurs commandés en tension (28), connectés entre le second élément conducteur (24) et la ligne de transmission (15).

4. Dispositif de protection selon la revendication 3, dans lequel la ligne de transmission (15) comprend un chemin (16) de matériau conducteur, et les premiers commutateurs commandés en tension sont formés par de premières diodes (26), chaque première diode (26) ayant son anode connectée au chemin (16) et sa cathode connectée au premier élément conducteur (22) ; et dans lequel les seconds commutateurs commandés en tension sont formés par de secondes diodes (28), chaque seconde diode (28) ayant sa cathode connectée au chemin (16) et son anode connectée au second élément conducteur (24).

5. Dispositif de protection selon la revendication 4, dans lequel les premières diodes (26) sont connectées au chemin (16) en de premiers points (18) respectifs du chemin (16), agencés à une certaine distance les uns des autres le long du trajet (16) ; dans lequel les secondes diodes (28) sont connectées au chemin (16) en de seconds points (20) respectifs du chemin (16), agencés à une certaine distance les uns des autres le long du chemin (16) ; et dans lequel les distances mutuelles entre des paires de premiers points adjacents (18) du trajet (16) et entre des paires de seconds points adjacents (20) du trajet (16) sont identiques l'une à l'autre sauf à une différence de $\pm$ 10 %.

6. Dispositif de protection selon la revendication 5, dans lequel les premiers et seconds points (18, 20) du chemin (16) sont agencés alternés le long du chemin (16).

7. Dispositif de protection selon la revendication 16, dans lequel chaque second point (20) du chemin (16) est agencé dans une position centrale par rapport à une paire respective de premiers points (18) adjacents.

8. Dispositif de protection selon l'une quelconque des revendications 4 à 7, dans lequel les premier et second commutateurs d'absorption comprennent, respectivement, un premier écrêteur de surtension (38) et un deuxième écrêteur de surtension (40), le premier écrêteur de surtension (38) ayant sa cathode connectée au premier élément conducteur (22) et son anode connectée à la ligne à potentiel de référence, le deuxième écrêteur de surtension (40) ayant son anode connectée au second élément conducteur (24) et sa cathode connectée à la ligne à potentiel de référence.

9. Dispositif de protection selon la revendication 8, dans lequel les premier et second commutateurs d'absorption comprennent en outre un troisième écrêteur de surtension (46) et un quatrième écrêteur de surtension (48) ; les premier et deuxième écrêteurs de surtension (38, 40) ayant une première tension de conduction (Vb1), les troisième et quatrième écrêteurs de surtension (46, 48) ayant une seconde tension de conduction (Vb2) différente de la première tension de conduction (Vb1).

10. Dispositif de protection selon la revendication 9, comprenant en outre un premier transistor (50) et un second transistor (52) de type MOSFET, et dans lequel :

- le troisième écrêteur de surtension (46) a sa cathode connectée au premier élément conducteur (22) et son anode connectée à une première borne de conduction du premier transistor (50) ;
- le quatrième écrêteur de surtension (48) a son anode connectée au second élément conducteur (24) et sa cathode connectée à une première borne de conduction du second transistor (52) ; et
- une seconde borne de conduction du premier transistor (50) et une seconde borne de conduction du second transistor (52) sont connectées à la ligne à potentiel de référence.

11. Dispositif de protection selon la revendication 10, comprenant en outre un noeud de commande (TX/RX) et un inverseur (54), le premier transistor (50) ayant une borne de commande connectée au noeud de commande (TX/RX), l'inverseur (54) ayant une borne d'entrée connectée au noeud de commande (TX/RX) et une borne de sortie connectée à une borne de commande du second transistor (52).

12. Dispositif de protection selon l'une quelconque des revendications 4 à 11, dans lequel le chemin (16) a une forme sinusoïdale.

**13.** Dispositif de protection selon la revendication 12, dans lequel les premier et second éléments conducteurs (22, 24) sont agencés sur des côtés opposés par rapport au chemin (16).

**14.** Dispositif de protection selon l'une quelconque des revendications 4 à 13, dans lequel les première et seconde diodes (26, 28) sont des diodes Schottky.

**15.** Dispositif de protection selon l'une quelconque des revendications 3 à 14, comprenant en outre :

- une pluralité de premiers condensateurs de référence (42), connectés entre le premier élément conducteur (22) et la ligne à potentiel de référence ; et
- une pluralité de seconds condensateurs de référence (44), connectés entre le second élément conducteur (24) et la ligne à potentiel de référence.

**16.** Appareil de radiocommunications comprenant un dispositif de protection (10) selon l'une quelconque des revendications précédentes, et comprenant en outre une antenne (5) et au moins une unité électronique choisie entre un étage de transmission (2) et un étage de réception (3), le dispositif de protection (10) étant connecté entre l'antenne (5) et l'unité électronique.

**17.** Appareil de radiocommunications selon la revendication 16, dans lequel la ligne de transmission (15) est connectée à une ligne externe pour des signaux radiofréquences ($T_{in}$, $T_{out}$), qui a une première impédance caractéristique ($Z_0$), la ligne de transmission (15) ayant une seconde impédance caractéristique ($Z_\infty$), au moins égale au double de la première impédance caractéristique ($Z_0$).

FIG. 1

FIG. 3

FIG. 2

EP 2 484 017 B1

FIG. 4

FIG. 5

FIG. 7

FIG. 6

EP 2 484 017 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050063129 A
- WO 2008091254 A